# EUROPÄISCHE PATENTSCHRIFT

(11) **EP 0 899 018 B1**
(45) Veröffentlichungstag und Bekanntmachung des Hinweises auf die Patenterteilung: **22.05.2002**
(21) Anmeldenummer: 98113512.2
(22) Anmeldetag: 20.07.1998
(51) Int. Cl.: B05B 12/00

(54) **Netzwerk zum Steuern einer Beschichtungsanlage**
Network for controlling a coating installation
Réseau de contrôle d'une installation de revêtement

(30) Priorität: 01.09.1997 DE 19738141
(43) Veröffentlichungstag der Anmeldung: 03.03.1999
(73) Patentinhaber: WAGNER INTERNATIONAL AG, 9450 Altstätten (CH)
(72) Erfinder: Seitz, Kurt, 9443 Widnau (CH); Hasler, Markus, 9462 Montlingen (CH); Adams, Horst Dr., 9016 St. Gallen (CH)
(74) Vertreter: Liesegang, Roland, Dr.-Ing.

(56) Entgegenhaltungen:
- EP-A- 0 706 102
- GB-A- 2 070 281
- US-A- 4 894 252
- US-A- 5 739 429

## Beschreibung

Die Erfindung betrifft ein Steuersystem einer Beschichtungsanlage für ein Beschichtungsmedium, wie Pulver oder Naßlack, mit mindestens einem Beschichtungsgerät gemäß dem Oberbegriff des Anspruchs 1.

Herkömmliche automatisierte Beschichtungsanlagen werden über speicherprogrammierbare Steuerungen (SPS) gesteuert. Dabei befindet sich eine zentrale Recheneinheit in einem Schaltschrank, von dem aus eine Vielzahl von elektrischen und pneumatischen Leitungen zu den Sensoren und Stellgliedern (Aktoren) der Anlage gehen.

Die aktuellen Zustände der Sensoren (z.B. Fördertakt, Füllstand usw.) werden zyklisch von der Zentraleinheit erfaßt (sequentielles Polling), die notwendigen Reaktionen der zugehörigen Stellglieder werden jeweils errechnet und dann an diese weitergeleitet. Sobald das Aufgabenspektrum durch die Einbindung weiterer Sensoren und Stellglieder umfangreicher wird, entsteht ein zusätzlicher Datenfluß durch die SPS, den diese ab einem gewissen Umfang nicht mehr verarbeiten kann.

Die kritische Datenmenge wird bei größeren Lackiersystemen mit zahlreichen Beschichtungsgeräten, einschließlich der zugehörigen Sensoren und Stellglieder, leicht überschritten.

Dabei ist die SPS wegen ihrer zentralen Stellung in herkömmlichen Anlagen der neuralgische Punkt des Gesamtsystems. Neben einem enormen Verkabelungs- und Leitungsaufwand (elektrisch und pneumatisch) sowohl für den Schaltschrankaufbau als auch am Lackierort ist die individuelle Programmierung der Anlagen sehr aufwendig und schwierig. Bei der Einschaltung von neuen Komponenten muß die Zentraleinheit neu programmiert werden; während dieser Zeit steht die Anlage.

Treten Funktionsstörungen der SPS nach Inbetriebnahme auf, können leicht hohe Schäden durch den damit verbundenen Ausfall der Gesamtanlage entstehen.

In EP 0 706 102 ist ein verteiltes Steuersystem für eine Beschichtungsanlage beschrieben. Bei diesem System sind zentral durch die SPS gesteuerte Funktionen teilweise auf einzelne, von einer übergeordneten Systemsteuerung gelenkte Steuereinheiten, welche die Sprühpistolen ansteuern, ausgelagert.

Durch die Steuerung der Anlage durch eine zentrale Steuereinheit entstehen, wie weiter oben erläutert wurde, Nachteile aufgrund der Fehleranfälligkeit des Systems und der begrenzten Bandbreite des Datenflusses. Schließlich fehlt es den bekannten speicherprogrammierbaren Steuerungen besonders im Hinblick auf die Integration von Kundenwünschen an Flexibilität.

Aufgabe der Erfindung ist es daher, ein neues, dezentrales Steuersystem für eine Beschichtungsanlage anzugeben, das möglichst einfach strukturiert, flexibel und sowohl hinsichtlich der Anzahl der Beschichtungsgeräte als auch der Überwachungs- und Steuermöglichkeiten leicht erweiterbar ist und den Einsatz von Expertenwissen bei Betrieb der Anlage minimiert. Zusätzlich sollen der Arbeitsaufwand für die Projektierung und Montage sowie die Herstellungskosten gesenkt werden.

Diese Aufgabe wird durch ein Steuersystem einer Beschichtungsanlage mit den Merkmalen von Anspruch 1 gelöst. Weitere bevorzugte Ausführungsformen des Steuersystems sind in den abhängigen Ansprüchen angegeben.

Bei einem Steuersystem nach der Erfindung sind dem oder jedem Beschichtungsgerät einer Beschichtungsanlage eine eigene Mengenmeßeinrichtung und eine Mengensteuereinrichtung für das Beschichtungsmedium, insbesondere Beschichtungspulver oder Naßlack, sowie ein digitales Steuergerät zugeordnet, welches das Beschichtungsgerät selbsttätig steuert und/oder regelt. Die genannten Baugruppen sind dabei über eine einheitliche Busstruktur miteinander verbunden.

Das Steuersystem nach der Erfindung ermöglicht den Aufbau eines integrierten modularen Beschichtungssystems. Ein solches Beschichtungssystem ist sowohl bei einfachen Handanlagen als auch bei komplexen automatischen Beschichtungsanlagen einsetzbar und flexibel an Spezialwünsche des Anwenders anpaßbar. Dies gelingt dadurch, daß das Steuergerät anders als bei einem SPS-System nur noch über elektrische Signalleitungen mit den übrigen Baugruppen verbunden ist, und daß aufgrund des Einsatzes einer Busstruktur schon für die kleinste Beschichtungseinheit mit nur einem Beschichtungsgerät der Verkabelungsaufwand minimiert ist.

Das Prinzip des erfindungsgemäßen Steuersystems erlaubt es, bei Beschichtungsanlagen mit mehreren Beschichtungsgeräten die Steuer-, Überwachungs- und Regelungsfunktionen zu dezentralisieren. Hierzu sind die Mengenmeßeinrichtungen und die Mengensteuereinrichtung nach Art von "intelligenten" Netzwerk-Knoten aufgebaut. Der oder jeder Netzwerk-Knoten enthält einen Sensor und/oder ein Stellglied, eine anwendungsspezifische Elektronik, einen Steuerbaustein und eine Schnittstelle zum Bus. Der Bus verbindet diese "intelligenten" Netzwerk-Knoten mit dem digitalen Steuergerät, so daß eine autarke, sich selbst regelnde Funktionseinheit entsteht. Das heißt, die einzelnen Beschichtungsgeräte werden nicht mehr wie beim Stand der Technik zentral angesteuert, sondern jedes Beschichtungsgerät besitzt "Eigenintelligenz", wodurch eine vollständige Dezentralisierung der Steuerung der Beschichtungsanlage möglich wird.

Das Steuergerät kann seinerseits einen solchen Netzwerk-Knoten bilden, der über die Busstruktur mit weiteren gleichen Beschichtungs-Funktionseinheiten und anderen Komponenten des Systems verbindbar ist. Die Konfiguration der verschiedenen System-Komponenten als Netzwerk-Knoten erhöht nochmals die Flexibilität hinsichtlich der Anzahl der Beschichtungsgeräte und der Überwachungs- und Steuermöglichkeiten, weil problemlos weitere System-Komponenten in Form von zusätzlichen Netzwerk-Knoten in das Netzwerk eingeschaltet werden können, die wiederum keine Einbindung in ein zentrales Steuersystem benötigen, sondern dezentral gesteuerte Funktionseinheiten sind. Durch das Zusammenspiel der Systemkomponenten ergibt sich eine Funktionalität die erheblich über der Summe der Einzelkomponenten liegt (Synergie).

Die Netzwerk-Knoten sind LON-Knoten, die in einem LON-Netzwerk (LON: Local Operating Network) verbunden sind. Ein LON-Netzwerk ist eine von zahlreichen bekannten Netzwerk-Konfigurationen, die nach den Feststellungen der Erfinder sich für die Anwendung in Beschichtungssystemen besonders eignen und deshalb hier ausgewählt worden sind.

Ein LON-Netzwerk besteht aus einer Vielzahl einzelner Knoten, einer Übertragungsleitung und einem "Datenprotokoll", welches die Regeln für den Datenaustausch über diese Leitung festlegt. Die Kombination aus Leitung und Datenprotokoll wird auch als Bus bezeichnet. LON-Knoten verfügen über Eigenintelligenz, sie können sich im Netz selbst anmelden und anderen Knoten ihre Funktion mitteilen sowie sich selbst an die Konfiguration des Gesamtsystems anpassen und umprogrammieren. Eine übergeordnete (hierarchische) Steuerung ist hierfür nicht notwendig.

Die Erfindung ist im folgenden anhand des Beispiels einer elektrostatischen Pulverbeschichtungsanlage mit Bezug auf die Zeichnungen näher erläutert.
- Fig. 1a: zeigt schematisch ein Pulversprühsystem nach dem Stand der Technik;
- Fig. 1b: zeigt ein Steuersystem nach einer ersten Ausführungsform der Erfindung;
- Fig. 2a: zeigt ein Steuersystem nach einer zweiten Ausführungsform der Erfindung;
- Fig. 2b: zeigt eine modifizierte Ausführungsform des Steuersystems der Fig. 2a;
- Fig. 3: zeigt eine Pulverbeschichtungsanlage mit einem Steuersystem der Erfindung;
- Fig. 4: zeigt eine erweiterte Pulverbeschichtungsanlage mit einem Steuersystem der Erfindung; und
- Fig. 5: zeigt Beispiele für zwei Knoten des erfindungsgemäßen Steuersystems.

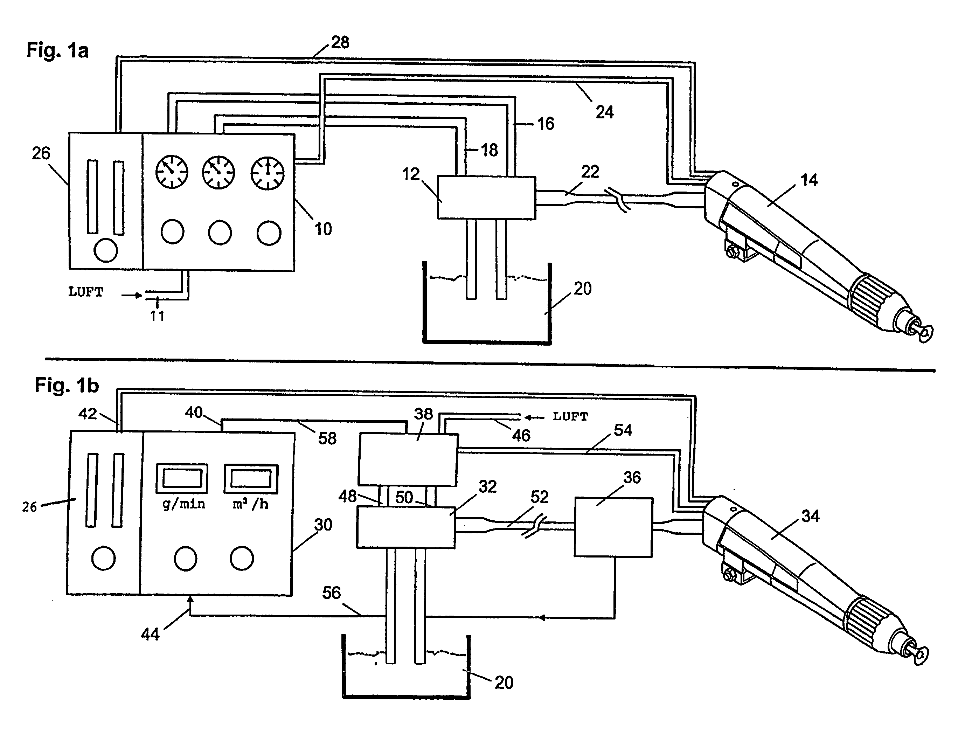

Fig. 1a zeigt schematisch eine Pulverbeschichtungsanlage mit einem Steuersystem nach dem Stand der Technik. Die Hauptkomponenten dieser Beschichtungsanlage sind ein analoges Steuergerät 10, ein Förderinjektor 12 und eine Sprühpistole 14. Das Steuergerät 10 erhält über eine Leitung 11 Druckluft und stellt den Luftdruck für die Förderluft und die Dosierluft des Förderinjektors 12 sowie die Zerstäuberluft der Sprühpistole 14 ein und zeigt diese Größen an. Die Förderund die Dosierluft werden über eine Förderluftleitung 16 und eine Dosierluftleitung 18 dem Förderinjektor 12 zugeführt, welcher Beschichtungspulver aus einem Pulvervorratsbehälter 20 ansaugt und ein Pulver-Luft-Gemisch erzeugt, das über eine Speiseleitung 22 zu der Sprühpistole 14 transportiert wird. Die Zerstäuberluft wird direkt durch eine Zerstäuberluftleitung 24 von dem Steuergerät zur Sprühpistole geleitet. Der Pulvervorratsbehälter weist eine (nicht gezeigte) Fluidisiereinrichtung und einen Fluidisierlufteingang auf.

In dem Steuergerät 10 ist zusätzlich ein Strom-/Spannungs-Steuerteil 26 untergebracht, das über eine Leitung 28 ein Steuersignal an die Sprühpistole 14 überträgt, um das für die elektrostatische Pulverbeschichtung benötigte Potential zu erzeugen.

Beim Betrieb der beschriebenen Pulverbeschichtungsanlage müssen im wesentlichen sieben Betriebsparameter eingestellt und überwacht werden, von denen die Beschichtungsqualität abhängig ist und die zum Teil in Wechselwirkung zueinander stehen. Diese Betriebsparameter sind: Förderluft, Dosierluft, Zerstäuberluft, Hochspannung und Strom des Hochspannungserzeugers, Pulverniveau im Vorratsbehälter und Fluidisierluft.

Da in der Praxis alle diese Betriebsparameter von ungelernten Hilfskräften eingestellt und überwacht werden müssen, besteht eine hohe Wahrscheinlichkeit von Fehlbedienungen. Um gute Beschichtungsergebnisse erzielen zu können, ist spezielles Expertenwissen für die Einstellung erforderlich.

Fig. 1b zeigt eine erste Ausführungsform des Steuersystems der Erfindung. Das Steuersystem besteht im wesentlichen aus einem digitalen Steuergerät 30 mit einem Strom/Spannungssteuerteil 26, einem Förderinjektor 32, einer Sprühpistole 34, einer Pulvermengenmeßeinrichtung in Form eines Pulvermengensensors 36 und einer Pulvermengensteuereinrichtung in Form einer Proportionalventileinheit 38.

Das digitale Steuergerät 30 hat einen Steuersignalausgang 40 zur Abgabe von Steuersignalen an die Proportionalventileinheit 38 und einen Spannungssignalausgang 42 zur Abgabe eines Spannungssteuersignals an die Sprühpistole 34. Die Sprühpistole enthält einen (nicht gezeigten) Hochspannungserzeuger. Das Steuergerät hat einen Signaleingang 44 für ein Rückführungssignal von dem Pulvermengensensor 36. Ferner wird die Proportionalventileinheit 38 aus einer Luftzufuhrleitung 46 gespeist, welche sich in eine Förderluftleitung 48 und eine Dosierluftleitung 50 verzweigt, um das von dem Injektor ausgegebene Pulver-Luft-Gemisch einzustellen bzw. zu regeln.

Das in Fig. 1b gezeigte Steuersystem der Pulverbeschichtungsanlage kann durch Umrüsten einer bekannten Anlage gemäß Fig. 1a aufgebaut werden, indem das analoge Steuergerät 10 durch das digitale Steuergerät 30 ersetzt wird, die Proportionalventileinheit 38 an dem oder in der Nähe des Injektors 32 angebracht wird und der Pulvermengensensor 36 in die Pulverzuführung 52 für jede Sprühpistole 34 möglichst nah an der Sprühpistole eingebaut wird.

Bei der in Figur 1b gezeigten Anordnung wird das von dem Injektor 32 erzeugte Pulver-Luft-Gemisch von dem Pulvermengensensor 36 erfaßt, der ein entsprechendes Signal über die Leitung 56 an das digitale Steuergerät 30 abgibt. Dieses schickt über die Leitung 58 ein Steuersignal an die Proportionalventileinheit 38 zur Einstellung der Förderluft und der Dosierluft, um das Pulver-Luft-Gemisch automatisch zu regeln.

Anders als bei Fig. 1a führen keine Druckluftleitungen von der Steuergerät 30 zum Injektor 32 und zur Sprühpistole 31. Der Pulvermengensensor 36 und die Proportionalventileinheit 38 sind mit dem digitalen Steuergerät 30 nur über die Signalleitungen 56, 58 verbunden, auf denen elektrische, digitale Steuersignale übertragen werden, und die - obwohl in der Zeichnung als einzelne Leitungen dargestellt - erfindungsgemäß in einer Busstruktur zusammengefaßt sind, wie im folgenden näher erläutert ist.

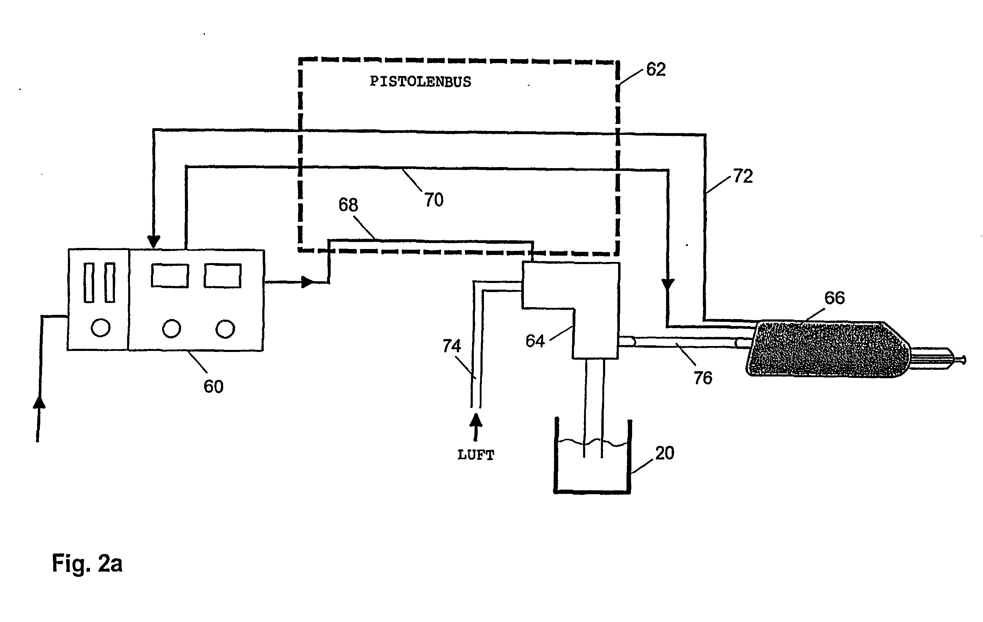

Fig. 2a zeigt schematisch eine weitere Ausführungsform der vorliegenden Erfindung, bei der die Proportionalventileinheit in den Injektor 64 und der Pulvermengensensor in die Sprühpistole 66 integriert sind. Ein technisch gleichwertiges Ergebnis erhält man, wenn die Proportionalventileinheit und der Pulvermengensensor in unmittelbarer Nähe des Injektors 64 bzw. der Sprühpistole 66 angeordnet sind.

In Fig. 2a ist das digitale Steuergerät 60, welches im wesentlichen mit dem Steuergerät 30 der Fig. 1b übereinstimmt, lediglich schematisch dargestellt. Das Steuergerät 60 ist über einen Pistolenbus 62 mit dem Injektor 64 und der Sprühpistole 66 verbunden. Bei der Darstellung der Fig. 2a sind einzelne Steuerleitungen 68, 70 von dem digitalen Steuergerät 60 zu dem Injektor 64 bzw. der Sprühpistole 66, und eine weitere Leitung 72 von der Sprühpistole 66 zurück zum digitalen Steuergerät 60 gezeigt. Diese Leitungen sind zu dem Pistolenbus 62 zusammengefaßt; dabei deuten die Pfeile die jeweilige Richtung des Signalverlaufs an.

Der Injektor 64 hat nur eine zentrale Luftzuführung 74 und nur einen Eingang für die elektronische Ansteuerung. Von dem Injektor 64 führt eine Pulverspeiseleitung 76 zu der Sprühpistole 66.

Die Funktion des in Fig. 2a gezeigten Systems ist im wesentlichen gleich der von Fig. 1b. Diese Funktion wird jedoch mit weniger Einzelkomponenten erzielt, wodurch sich der Aufwand für das Ausschließen von Signalleitungen und die Verlegung der Luftleitungen weiter verringert.

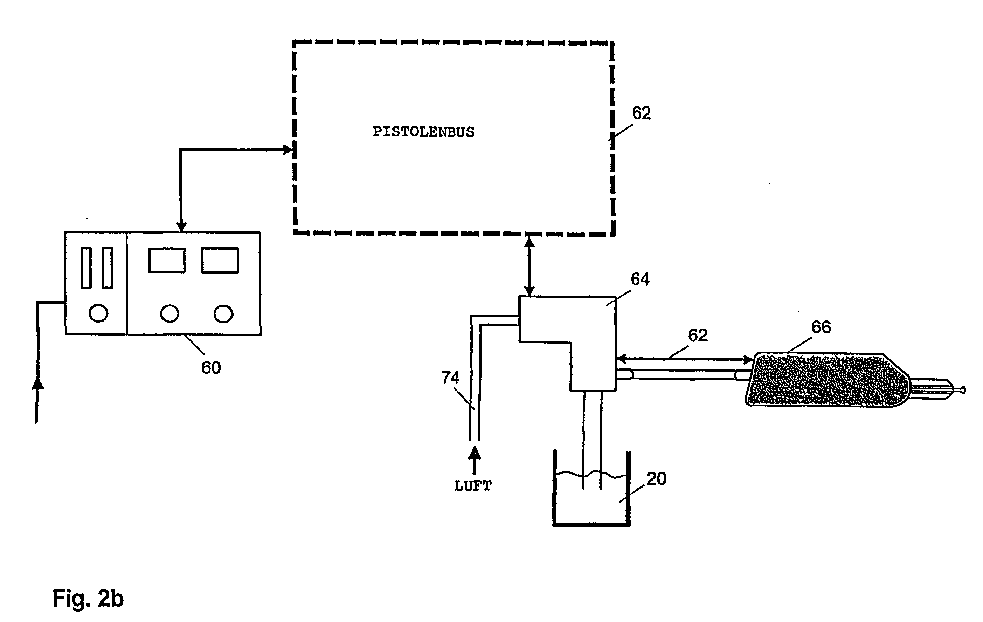

Eine weitere Ausführungsvariante des erfindugnsgemäßen Systems ist in Figur 2b gezeigt, wobei in den Fig. 2a und 2b dieselben Komponenten mit denselben Bezugszeichen bezeichnet sind.

Bei dem Steuersystem gemäß Fig. 2b sind für die Signalübermittlung keine Einzelleitungen mehr vorgesehen; die gesamte elektrische Signalübertragung erfolgt über den Pistolenbus 62, 62'. Dieser reicht vom Steuergerät 60 zum Injektor 64 und von dort zur Sprühpistole 66. Die Signalübertragung über den Pistolenbus 62 ist bidirektional.

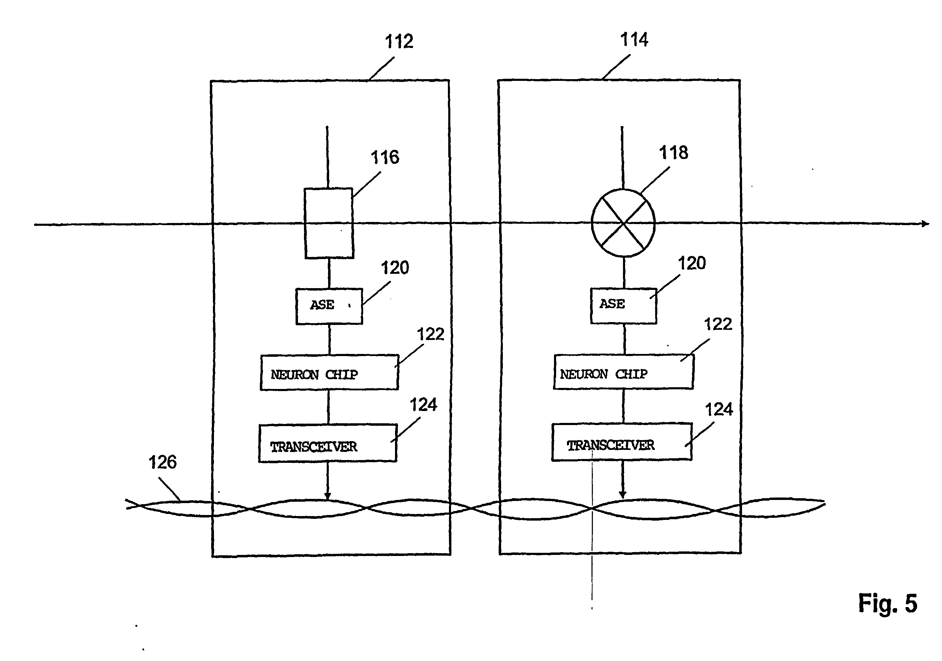

Der Pistolenbus 62, 62' ist vorzugsweise ein LON-Bus, und die Proportionalventileinheit und der Pulvermengensensor sind als LON-Knoten konfiguriert, die digital kodierte Signale empfangen und senden, wie unten mit Bezug auf Figur 5 näher beschrieben ist.

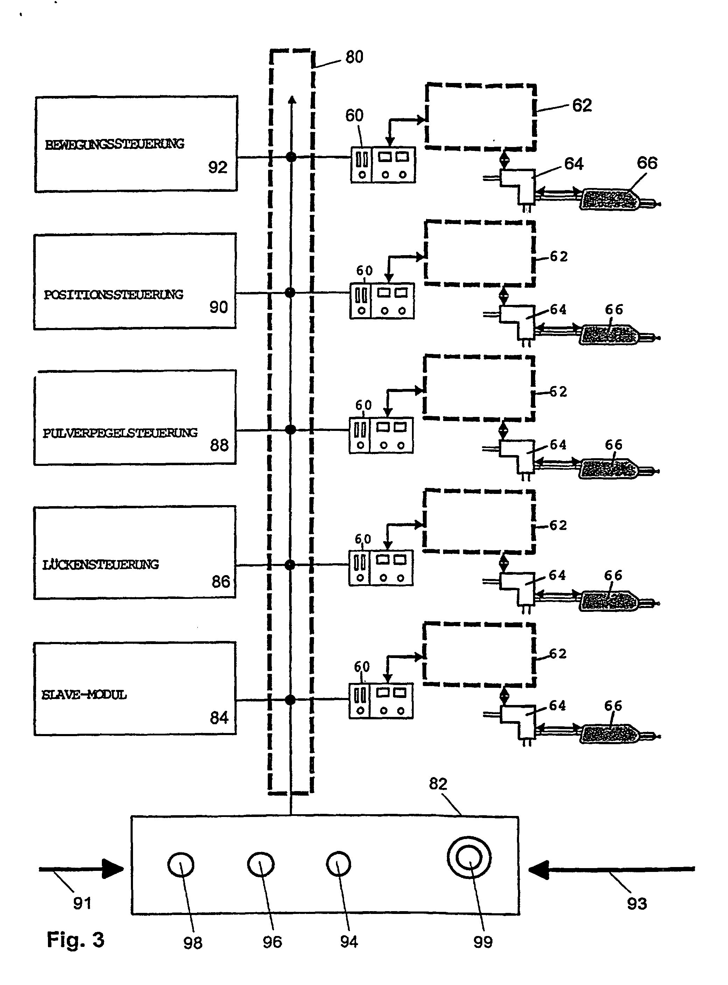

Eine weitere Ausführungsform eines Steuersystems für eine Pulverbeschichtungsanlage gemäß der Erfindung ist in Fig. 3 gezeigt.

In Fig. 3 sind auf der rechten Seite mehrere (fünf) Beschichtungsmodule aus jeweils einem digitalen Steuergerät 60, einem Injektor 64 mit integrierter Regeleinheit und einer Sprühpistole 66 mit integriertem Pulvermengensensor dargestellt, die über einen Pistolenbus 62 verbunden sind. Diese Beschichtungsmodule 60 bis 66 bilden autarke, selbstregelnde Funktionseinheiten, welche ihre jeweiligen Steuersignale von dem digitalen Steuergerät 60 erhalten. Sollwerte und für die Regelung notwendige Informationen über den Betriebszustand der Beschichtungsanlage erhält das Steuergerät 60 über einen internen Bus 80.

Über den internen Bus sind mehrere Beschichtungsmodule 60 bis 66 miteinander und mit einer zentralen Steuermodul 82 sowie mit weiteren Komponenten des Systems verbunden. Zusätzliche, an den internen Bus anschließbaren Module können neben dem zentralen Steuermodul 82 ein Slave-Steuermodul 84, ein Lückensteuermodul 86, ein Pulverpegelsteuermodul 88, ein Positionssteuermodul 90 und ein Bewegungssteuermodul 92 sein. Der Bus 80 ist vorzugsweise als LON-Bus ausgestaltet.

Die Funktionen der einzelnen Module entsprechen im wesentlichen denjenigen der bekannten analogen Systeme mit dem Unterschied, daß die Module als LON-Knoten konfiguriert sind und eine LON-Schnittstelle besitzen, so daß sie an den LON-Bus 80 anschließbar sind.

Aufgabe des Steuermoduls 82 ist die zentrale Versorgung der gesamten Pulverbeschichtungsanlage mit elektrischer Leistung (Pfeil 91 und Anzeigelampe 98) und Druckluft (Pfeil 93 und Anzeigelampe 94). Anzeigelampe 96 zeigt den Aus-/Einzustand der Hauptbewegungsfunktionen der Sprühpistolen 66 an. Ferner weist das zentrale Steuermodul 82 einen Not-Ausschalter 99 mit Alarmgeber auf, um bei einer Störung das gesamte System von einer zentralen Stelle aus abschalten zu können.

Optional kann das zentrale Steuermodul 82 einen Speicher für die Aufzeichnung vergangener Prozeßparameter und die Speicherung von Sollwerten enthalten, die aus dem Speicher abgerufen werden können.

Das Slave-Steuermodul 84 enthält ein zusätzliches Netzgerät und wird im Falle einer Erweiterung des Gesamtsystems eingesetzt. Bei der Umsetzung der Erfindung in die Praxis kann das zentrale Steuermodul 82, z.B. bis zu 24 Sprühpistolen mit elektrischer Leistung und Druckluft versorgen. Falls innerhalb einer Pulverbeschichtungsanlage mehr als 24 Spruhpistolen angeschlossen werden sollen, übernimmt das Slave-Steuermodul 84 deren Versorgung, wobei die Not-Ausschaltfunktion für die Gesamtanlage jedoch bei dem zentralen Steuermodul 82 bleibt.

Das Lückensteuermodul 86 dient zum Ausschalten der Sprühpistolen in den Lücken zwischen den an der Beschichtungsanlage vorbeigeförderten Werkstücken 200 oder Werkstückteilen. Das Pulverpegelsteuermodul 88 überwacht den Pegelstand in einem Pulvervorratsbehälter und stellt diesen für die gleichmäßige Pulverförderung auf einen konstanten Wert ein. Das Positionssteuermodul 90 steuert die Position der Sprühpistolen in z-Richtung abhängig von der Dicke des zu beschichtenden Werkstücks 200, um stets einen optimalen Abstand von Sprühpistole 66 zu Werkstück 200 einzuhalten. Das Bewegungssteuermodul 92 steuert die Auf- und Abwärtsbewegung der Sprühpistole 66 abhängig von der Höhe des zu beschichtenden Werkstücks 200.

Das in Fig. 3 gezeigte System ist aufgrund seiner Busstruktur leicht erweiterbar und veränderbar, weil sowohl weitere Beschichtungsmodule als auch sonstige zusätzliche Module an den Bus angekoppelt werden können. Die einzelnen Komponenten, die als LON-Knoten konfiguriert sind, können sich im System selbst anmelden, andere Systemkomponenten erkennen, sich auf diese einstellen und mit diesen kommunizieren. Bei An- oder Abkoppelung einzelner Komponenten ist keine Umprogrammierung der anderen Komponenten nötig, weil jeder LON-Knoten dem LON-Netz seine Funktion mitteilen und die für ihn bestimmten, kodierten selbsttätig Signale erkennen kann.

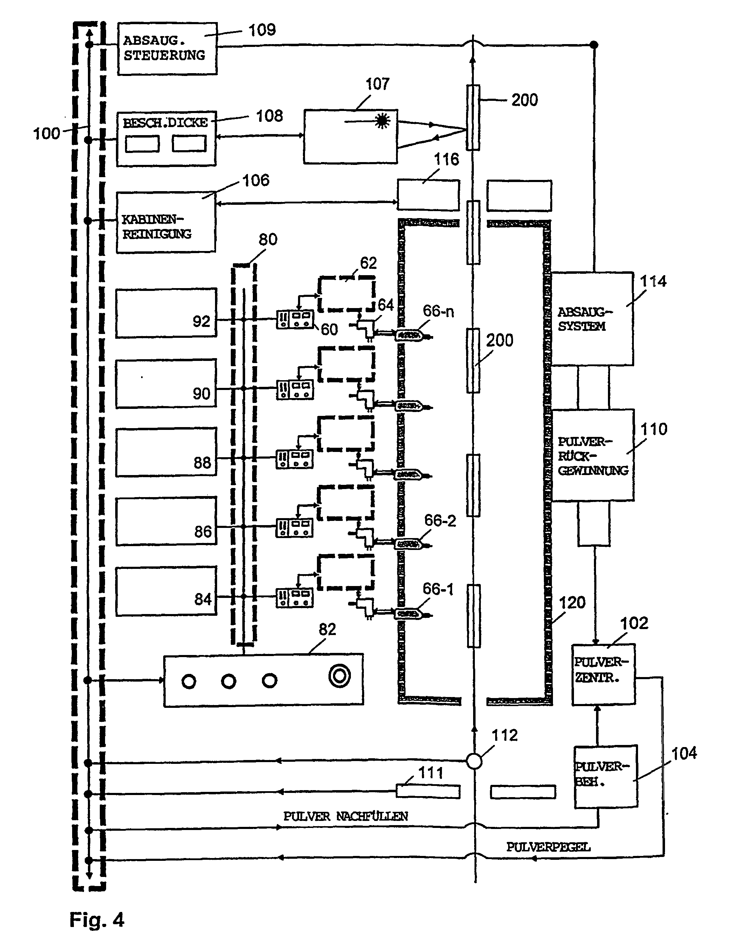

Fig. 4 zeigt eine nochmals erweiterte Pulverbeschichtungsanlage, bei der über einen dritten oder externen Bus 100 weitere Baugruppen angekoppelt sind, die in größeren Pulverbeschichtungsanlagen vorkommen. Diese weiteren Baugruppen werden über den externen Bus 100 ebenfalls mit dem zentralen Steuermodul 82 verbunden. Sie umfassen bei dem gezeigten Beispiel ein Pulverzentrum 102 mit einem Pulvervorratsbehälter 104 und einer Pulverniveausonde 105, ein Reinigungs-Steuermodul 106 für die automatische Kabinenreinigung, eine Schichtdickenmeß- und Regeleinrichtung 108 und eine Luftmengenregeleinrichtung 109 für ein Pulverrückgewinnungssystem 110, ein Teilerkennungsmodul 111 und einen Fördertaktgeber 112. Das zentrale Steuermodul 82 verbindet den externen und den internen Bus, die in Funktion und Aufbau im wesentlichen gleich sind. Auch der externe Bus 100 ist vorzugsweise ein LON-Bus.

Der Betrieb der in Figur 4 gezeigten Pulverbeschichtungsanlage läuft wie folgt ab. Ein Werkstück 200 nähert sich der Beschichtungskabine 120 und wird von dem Teileerkennungsmodul 111 erkannt. Das Teileerkennungsmodul 111 erfaßt sowohl, daß ein Werkstück 200 sich annähert, als auch die Art, insbesondere Größe und Form des Werkstücks 200. Diese Informationen werden auf den Bus 100, 80 gegeben und stehen sofort bei allen anderen Komponenten der Pulverbeschichtungsanlage zur Verfügung. Dadurch werden die verschiedenen Komponenten, wie Sprühpistolen 66, digitales Steuergerät 60, Bewegungssteuermodul 92, Positionssteuermodul 90 etc. in Bereitschaft versetzt. Mit Hilfe eines vom Fördertaktgeber 112 vorgegebenen Fördertaktes wird die Geschwindigkeit des Werkstückes erfaßt und ebenfalls auf den Bus 100, 80 gegeben. Damit "wissen" die verschiedenen Komponenten des Systems, wann das Werkstück 200 ankommt.

Bei Ankunft des Werkstückes 200 beginnt die erste Sprühpistole 66-1 zu sprühen, wobei aufgrund der Teile- und Geschwindigkeitsinformation bekannt ist, welche Position in z-Richtung, d.h. welchen Abstand zum Werkstück 200 die Sprühpistole haben muß, welche Hubbewegung die Sprühpistole machen muß, wo Werkstücklücken sind, bei denen die Sprühpistole abzuschalten ist, etc. Das der Sprühpistole 66-1 zugeordnete digitale Steuergerät gibt die Information, daß die Pistole sprüht bzw. nicht sprüht, auf den Bus 80, so daß die einzelnen Sprühpistolen 66-1 bis 66-n synchronisiert werden können. Innerhalb jeder Beschichtungseinheit 60-66 wird die ausgebrachte Pulvermenge geregelt, wobei abhängig von dem zu beschichtenden Werkstück verschiedene Farben und verschiedene Sollwerte für die ausgebrachte Pulvermenge vorgegeben werden können. Diese Vorgaben sind in dem zentralen Steuermodul 82 oder jedem digitalen Steuergerät 60 gespeichert, und sie werden abhängig von dem erkannten Werkstück 200 abgerufen.

Bei dem in Figur 4 gezeigten System ist über den externen Bus 100 die automatische Regelung der Pulverschichtdicke auf dem Werkstück 200 mit Hilfe des Schichtdickensteuermoduls 108 und eines Schichtdickensensors 107 möglich. Über die Luftmengenregeleinrichtung 109 kann das Absaugsystem 114 angesteuert werden, um den Wirkungsgrad der Rückgewinnungsanlage 110 zu optimieren, wenn abhängig von der Gestalt des zu beschichtenden Werkstücks mehr oder weniger überschüssiges Pulver abgesaugt werden muß. Über das Reinigungssteuermodul 106 und eine automatische Reinigungseinrichtung 116 ist eine vollautomatische Reinigung des Kabinensystems programmgesteuert möglich.

In Fig. 5 sind zwei Beispiele für die Anbindung von Einzelkomponenten an die Busstruktur in Form von LON-Knoten dargestellt.

Fig. 5 zeigt links das Schema eines Luftmengensensor-Knotens 112 und rechts das Schema eines Proportionalventil-Knotens 114. Die LON-Knoten 112, 114 sind aus einem Sensor, wie dem Luftmengensensor 116 oder einem Stellglied (Aktor), wie dem Proportionalventil 118, einer anwendungsspezifischen Elektronik 120, einem Neuron-Chip 122 und einem Adapter oder Transceiver 124 aufgebaut.

Der Transceiver 124 dient als Schnittstelle zur Verbindung des jeweiligen LON-Knotens mit dem LON-Bus, der hier als Zweidraht-Kommunikationsleitung 126 dargestellt ist. Der Neuron-Chip 122 bildet die Schnittstelle zwischen dem Transceiver und der anwendungsspezifischen Elektronik 120 und hat die Funktion, die LON-Knoten 112 oder 114 so zu konfigurieren, daß immer dasselbe Datenformat und Datenübertragungsprotokoll für die Kommunikation zwischen dem jeweiligen LON-Knoten und dem digitalen Steuergerät 30 bzw. den anderen Konten eines LON-Netzes verwendet werden kann.

Innerhalb des Neuron-Chips kann für Applikations- und Steueraufgaben z.B. ein 8-Bit Mikrocontroller zur Verfügung stehen, der sich in der zu ANSI-C kompatiblen Sprache Neuron-C programmieren läßt, so daß in jedem Knoten Intelligenz vor Ort zur Verfügung gestellt werden kann.

Ebenso wie der Luftmengensensor-Knoten 112 und der Proportionalventil-Knoten 114 lassen sich auch die anderen, an den internen oder den externen Bus 80, 100 angeschlossenen Komponenten der Pulverbeschichtungsanlage so konfigurieren, daß wenigstens für jede Gruppe aus zusammengehörigen ähnlichen Knoten ein einheitliches Bus-Datenprotokoll verwendet werden kann.

Das oben beschriebene Steuersystem führt zu den folgenden Vorteilen: das Steuersystem bietet eine vollautomatische Kontrolle der wesentlichen für die Beschichtung wichtigen Größen, wobei durch ständige selbsttätige Anlagenoptimierung die Notwendigkeit minimiert wird, Expertenwissen bei der Anlageneinstellung einzubringen.

Da alle wichtigen Beschichtungsparameter ständig automatisch erfaßt werden, ergibt sich die Möglichkeit der vollständigen Prozeßdokumentation.

Die automatische Schichtdickenregelung ermöglicht die Einhaltung sehr enger Toleranzwerte.

Dabei kann trotz der erzielten erheblichen Verbesserungen der Anlageneffizienz das Bedienungspersonal reduziert werden.

Durch Vermeiden oder zumindest Senken der Einstell- und Optimierungszeiten steigt die effektive Produktionszeit der Anlage.

Änderungen lassen sich lokal vornehmen, ohne daß das Gesamtsystem neu programmiert werden muß, wenn einzelne Komponenten ausgetauscht oder hinzugefügt werden.

Der modulare Systemaufbau ermöglicht es dem Kunden, sich eine Anlage nach seine Wünschen zusammenzustellen und relativ unproblematisch zu erweitern.

Für die Umrüstung eines bestehenden herkömmlichen SPS-Steuersystems sind in einer Übergangsperiode hybride Steuerungen denkbar, welche das SPS-System in Kombination mit dem LON-Netzwerk für nur einige Funktionen verwenden.

Durch die mit den LON-Knoten "vor Ort" installierte "Intelligenz" wird es möglich, die verschiedenen Anlagenkomponenten mit zusätzlichen Testmechanismen auszurüsten, welche selbsttätig lokale Tests durchführen. Man kann Alterungserscheinungen über das Anlagenverhalten bestimmen und diese über das Netzwerk abfragen. In ähnlicher Form läßt sich auch jeder andere Funktionszustand der Sensoren und Aktoren bestimmen und bei Bedarf eine Ferndiagnose per Modem durchführen. Fehler sind über die Telefonleitung bis hinunter in die Sensor-/ Aktorebene lokalisierbar. Updates und Upgrades der Steuersoftware lassen sich per Telefon in dafür vorbereitete Komponenten programmieren.

Die in der vorstehenden Beschreibung, den Ansprüchen und der Zeichnung offenbarten Merkmale können sowohl einzeln als auch in beliebiger Kombination für die Realisierung der Erfindung in den verschiedenen Ausgestaltungen von Bedeutung sein. Die Erfindung ist insbesondere auf elektrostatische Pulverbeschichtungsanlagen und auf Naßlackieranlagen gleichermaßen anwendbar.

## Patentansprüche

1. Steuersystem einer Beschichtungsanlage für ein Beschichtungsmedium, wie Pulver oder Naßlack, mit mindestens einem Beschichtungsgerät, bei der dem oder jedem Beschichtungsgerät (34, 66) eine Mengensteuereinrichtung (38) zur Einstellung der von dem Beschichtungsgerät (34, 66) abzugebenden Menge des Beschichtungsmediums und ein digitales Steuergerät (60) zur Steuerung des Betriebs des Beschichtungsgerätes (34, 66) zugeordnet sind, **dadurch gekennzeichnet, da**ß eine Mengenmeßeinrichtung (36) zur Bestimmung der dem Beschichtungsgerät (34, 66) zugeführten Menge des Beschichtungsmediums vorgesehen ist, und die Mengenmeßeinrichtung (36) und die Mengensteuereinrichtung (38) jeweils einen Netzwerkknoten (112, 114) bilden, der über eine Busstruktur (62) mit dem digitalen Steuergerät (60) verbunden ist, wobei die Netzwerkknoten (112, 114) LON-Knoten sind.

2. System nach Anspruch 1, **dadurch gekennzeichnet, daß** jeder Netzwerk-Knoten einen Sensor (116) und/oder ein Stellglied (118), eine anwendungsspezifische Elektronik (120), einen Steuerbaustein (122), und eine Schnittstelle (124) für die Verbindung mit der Busstruktur (62, 80; 126) aufweist.

3. System nach Anspruch 1 oder 2, **dadurch gekennzeichnet, daß** die Mengenmeßeinrichtung (36) und die Mengensteuereinrichtung über einen ersten LON-Bus (62) mit dem digitalen Steuergerät (60) verbunden und ansteuerbar sind.

4. System nach einem der vorhergehenden Ansprüche, **dadurch gekennzeichnet, daß** mehrere Beschichtungsgeräte (66) vorhanden sind, daß jeweils die zu einem Beschichtungsgerät gehörende Mengenmeßeinrichtung, Mengensteuereinrichtung und das digitale Steuergerät (60) über einen ersten LON-Bus (62) miteinander verbunden sind und einen weiteren LON-Knoten bilden, der über einen zweiten LON-Bus (80) mit einer zentralen Steuereinheit (82) verbunden ist.

5. System nach Anspruch 4, **dadurch gekennzeichnet, daß** die zentrale Steuereinheit (82) eine zentrale Steuereinrichtung für die Versorgung der Beschichtungsanlage mit Druckluft und elektrischem Strom und eine Notabschalteinrichtung aufweist.

6. System nach einem der vorhergehenden Ansprüche, **gekennzeichnet durch** eine Anzeigeeinrichtung für einen oder mehrere Betriebsparameter.

7. System nach einem der vorhergehenden Ansprüche, **gekennzeichnet durch** folgende weitere Komponenten, welche mit der Busstruktur (62, 80; 126) verbindbar sind: eine Lückensteuereinrichtung (86), eine Vorratssteuereinrichtung (88) für das Beschichtungsmedium, eine Positionssteuereinrichtung (90) und eine Bewegungssteuereinrichtung (92) für die Beschichtungsgeräte (66) und/oder eine Slave-Steuereinrichtung (84), wobei die weiteren Komponenten als Netzwerk-Knoten ausgebildet sind.

8. System nach einem der vorhergehenden Ansprüche **gekennzeichnet durch** folgende weitere Komponenten, welche mit der Busstruktur (62, 80; 126) verbindbar sind: eine Rückgewinnungs-Steuereinrichtung und eine Zufuhr-Steuereinrichtung für das Beschichtungsmedium, eine Teileerkennungseinrichtung, eine Fördertakt-Steuereinrichtung, eine Reinigungseinrichtung und/oder eine Schichtdickenmeßeinrichtung, wobei die weiteren Komponenten als Netzwerk-Knoten ausgebildet sind.

9. System nach einem der vorhergehenden Ansprüche **gekennzeichnet durch** eine Speichereinrichtung für die Betriebsparameter.

10. System nach einem der vorhergehenden Ansprüche **gekennzeichnet durch** einen Programmierrechner, der mit der Busstruktur koppelbar ist, um Sollwerte für die Betriebsparameter einzugeben und/oder den Betrieb der Beschichtungsanlage zu überwachen.

11. System nach einem der vorhergehenden Ansprüche, **dadurch gekennzeichnet, daß** die Mengenmeßeinrichtung in das Beschichtungsgerät integriert ist oder in der Nähe des Beschichtungsgerätes angeordnet ist.

12. Elektrostatische Pulverbeschichtungsanlage mit mindestens einem Beschichtungsgerät für ein Beschichtungsmedium, wie Pulver oder Naßlack, und mit einem Steuersystem nach einem der vorhergehenden Ansprüche.

13. Anlage nach Anspruch 12, **dadurch gekennzeichnet, daß** die Betriebsparameter Luftmenge, insbesondere der Förderluft, der Dosierluft und der Zerstäuberluft, Pulvermenge und -geschwindigkeit sowie Strom- und Spannungswerte umfassen.

14. Anlage nach Anspruch 12 oder 13, **dadurch gekennzeichnet, daß** die Mengensteuereinrichtung (64) eine Luftzufuhrleitung (46), eine Proportionalventileinheit (38) und einen Injektor (32) zur Regelung de Pulvermenge für das jeweilige Beschichtungsgerät aufweist.

15. Anlage nach Anspruch 14, **dadurch gekennzeichnet, daß** die Proportionalventileinheit (38) wenigstens zwei Proportionalventile für die Einstellung der Förderluft und der Dosierluft des jeweiligen Beschichtungsgerätes (34) aufweist.

## Claims

1. A control system of a coating apparatus for a coating medium, such as powder or wet lacquer, comprising at least one coating device (34, 66), in which a quantity control means (38) for setting the quantity of the coating medium to be discharged by the coating device (34, 66), and a digital control device (60) for controlling the operation of the coating device (34, 66) are associated to the or each coating device (34, 66), **characterized in that** a quantity measuring means (36) for determining the amount of coating medium supplied to the coating device (34, 66) is provided and the quantity measuring means (36) and the quantity control means (38) form one network node (112, 114) each, which is connected to the digital control device (60) via a bus structure (62), wherein the network nodes (112, 114) are LON nodes.

2. A system according to claim 1, **characterized in that** each network node comprises a sensor (116) and/or an actuator (118), an application-specific electronics (120), a control component (122), and an interface (124) for the connection with the bus structure (62, 80; 126).

3. A system according to claim 1 or 2, **characterized in that** the quantity measuring means (36) and the quantity control means are connected to the digital control device (60) via a first LON bus (62) and are controllable.

4. A system according to one of the preceding claims, **characterized in that** a plurality of coating devices (66) are provided, that the quantity measuring means, the quantity control means and the digital control device (60) belonging to one coating device are connected to one another via a first LON bus (62) and form a further LON node, which is connected to a central control unit (82) via a second LON bus (80).

5. A system according to claim 4, **characterized in that** the central control unit (82) comprises a central control means for the supply of the coating apparatus with pressurized air and electric current, and that the central control unit comprises an emergency turn-off means.

6. A system according to one of the preceding claims, **characterized by** a display means for one or a plurality of operating parameters.

7. A system according to one of the preceding claims, **characterized by** the following further components which are connectable to the bus structure (62, 80; 126): a gap control means (86), a reservoir control means (88) for the coating medium, a position control means (90) and a motion control means (92) for the coating devices (66) and/or a slave control means (84), wherein the further components are provided as network nodes.

8. A system according to one of the preceding claims, **characterized by** the following further components which are connectable to the bus structure (62, 80; 126): a recovery control means and a supply control means for the coating medium, an element detection means, a supply cycle control means, a cleaning means and/or a coating thickness measuring means, wherein the further components are provided as network nodes.

9. A system according to one of the preceding claims, **characterized by** a memory means for the operating parameters.

10. A system according to one of the preceding claims, **characterized by** a program computer, which can be coupled to the bus structure to input target values for the operating parameters and/or to control the operation of the coating apparatus.

11. A system according to one of the preceding claims, **characterized in that** the quantity measuring means is integrated into the coating device or is arranged in the proximity of the coating device.

12. An electrostatic powder coating apparatus, comprising at least one coating device for a coating medium, such as powder or wet lacquer, and comprising a control system according to one of the preceding claims.

13. An apparatus according to claim 12, **characterized in that** the operating parameters comprise air quantity, in particular supply air, dosing air and atomized air, powder quantity and speed as well as current and voltage values.

14. An apparatus according to claim 12 or 13, **characterized in that** the quantity control means (64) comprises an air supply line (46), a proportional valve unit (38) and an injector (32) for controlling the powder quantity for the respective coating device.

15. An apparatus according to claim 14, **characterized in that** the proportional valve unit (38) comprises at least two proportional valves for setting the feed air and the dosing air of the respective coating device (34).

## Revendications

1. Système de commande d'une installation d'application d'un revêtement pour un produit de revêtement, tel qu'une poudre ou une laque humide, comportant au moins un appareil d'application de revêtement, dans laquelle à l'appareil ou à chaque appareil d'application de revêtement (34, 66) sont associés un dispositif de commande de quantité (38) pour le réglage de la quantité de produit de revêtement à délivrer par l'appareil d'application de revêtement (34, 66), ainsi qu'un appareil de commande numérique (60) pour la commande du fonctionnement de l'appareil d'application de revêtement (34, 66), **caractérisé en ce qu'**il est prévu un dispositif de mesure de quantité (36) pour déterminer la quantité de produit de revêtement à envoyer à l'appareil d'application de revêtement (34, 66), et le dispositif de mesure de quantité (36) ainsi que le dispositif de commande de quantité (38) forment chacun un noeud de réseau (112, 114) qui est relié, par une structure à bus (62), à l'appareil de commande numérique (60), les noeuds de réseau (112, 114) étant des noeuds LON.

2. Système selon la revendication 1, **caractérisé en ce que** chaque noeud de réseau comporte un capteur (116) et/ou un organe de réglage (118), une électronique (120) spécifique à l'application, un composant de commande (122) et une interface (124) pour la liaison avec la structure à bus (62, 80 ; 126).

3. Système selon la revendication 1 ou 2, **caractérisé en ce que** le dispositif de mesure de quantité (36) et le dispositif de commande de quantité sont reliés à l'appareil de commande numérique (60) et peuvent être commandés, par l'intermédiaire d'un premier bus LON (62).

4. Système selon l'une des revendications précédentes, **caractérisé en ce que** sont prévus plusieurs appareils d'application de revêtement (66), **en ce que** le dispositif de mesure de quantité, le dispositif de commande de quantité et l'appareil de commande numérique (60) faisant partie d'une appareil d'application de revêtement, sont reliés entre eux par un premier bus LON (62), et forment un autre noeud LON qui est relié à une unité de commande centrale (82), par un deuxième bus LON (80).

5. Système selon la revendication 4, **caractérisé en ce que** l'unité de commande centrale (82) comporte un dispositif de commande central pour l'alimentation de l'installation d'application de revêtement en air comprimé et courant électrique, ainsi qu'un dispositif d'arrêt de secours.

6. Système selon l'une des revendications précédentes, **caractérisé par** un dispositif d'affichage pour un ou plusieurs paramètres de fonctionnement.

7. Système selon l'une des revendications précédentes, **caractérisé par** les autres composants suivants qui peuvent être reliés à la structure à bus (62, 80 ; 126) : un dispositif de commande d'intervalle (86), un dispositif de commande de réserve (88) pour le produit de revêtement, un dispositif de commande de position (90) et un dispositif de commande de déplacement (92) pour les appareils d'application de revêtement (66) et/ou un dispositif de commande esclave (84), les autres composants étant réalisés en tant que noeuds de réseau.

8. Système selon l'une des revendications précédentes, **caractérisé par** les autres composants suivants qui peuvent être reliés à la structure à bus (62, 80 ; 126) : un dispositif de commande de recyclage et un dispositif de commande d'alimentation pour le produit de revêtement, un dispositif de reconnaissance des pièces, un dispositif de commande de cadence de transport, un dispositif de nettoyage et/ou un dispositif de mesure de l'épaisseur d'une couche, les autres composants étant réalisés en tant que noeuds de réseau.

9. Système selon l'une des revendications précédentes, **caractérisé par** un dispositif à mémoire pour les paramètres de fonctionnement.

10. Système selon l'une des revendications précédentes, **caractérisé par** un calculateur programmable qui peut être accouplé à la structure à bus, afin d'introduire des valeurs de consigne pour les paramètres de fonctionnement et/ou pour surveiller le fonctionnement de l'installation d'application de revêtement.

11. Système selon l'une des revendications précédentes, **caractérisé en ce que** le dispositif de mesure de quantité est intégré à l'appareil d'application de revêtement ou est disposé à proximité de l'appareil d'application de revêtement.

12. Installation électrostatique d'application d'un revêtement en poudre comportant au moins un appareil d'application de revêtement pour un produit de revêtement, tel qu'une poudre ou une laque humide, et comportant un système de commande selon l'une des revendications précédentes.

13. Installation selon la revendication 12, **caractérisée en ce que** les paramètres de fonctionnement comprennent la quantité d'air, en particulier de l'air de transport, de l'air de dosage et de l'air de pulvérisation, la quantité et la vitesse de la poudre ainsi que les valeurs du courant et de la tension.

14. Installation selon la revendication 12 ou 13, **caractérisée en ce que** le dispositif de commande de quantité (64) comporte une conduite d'arrivée d'air (46), un ensemble de soupapes proportionnelles et un injecteur (32) pour la régulation de la quantité de poudre destinée à l'appareil d'application de revêtement respectif.

15. Installation selon la revendication 14, **caractérisée en ce que** l'ensemble de soupapes proportionnelles (38) comporte au moins deux soupapes proportionnelles pour le réglage de l'air de transport et de l'air de dosage de l'appareil d'application de revêtement (34) respectif.
